# EUROPÄISCHE PATENTSCHRIFT

(11) **EP 4 071 104 B1**
(45) Veröffentlichungstag und Bekanntmachung des Hinweises auf die Patenterteilung: **07.06.2023**
(21) Anmeldenummer: 22160315.2
(22) Anmeldetag: 04.03.2022
(51) Int. Cl.: B67C 3/28

(54) **ABFÜLLEN EINES MEDIUMS**
FILLING OF A MEDIUM
REMPLISSAGE D'UN MILIEU

(30) Priorität: 09.04.2021 DE 102021108840
(43) Veröffentlichungstag der Anmeldung: 12.10.2022
(73) Patentinhaber: SICK AG, 79183 Waldkirch (DE)
(72) Erfinder: Schweiger, Stefan, 79331 Teningen (DE); Weber, Thomas, 77960 Seelbach (DE)

(56) Entgegenhaltungen:
- WO-A1-2015/074763
- DE-A1-102005 035 264
- DE-A1-102013 106 103
- DE-A1-102016 114 885

## Beschreibung

Die Erfindung betrifft eine Abfüllvorrichtung und ein Verfahren zum Abfüllen eines Mediums nach dem Oberbegriff von Anspruch 1 beziehungsweise 13.

Abfüllanlagen werden in verschiedenen Bereichen wie Lebensmittel, Pharma, Kosmetik oder Chemie eingesetzt. Das abzufüllende Medium ist meist eine Flüssigkeit, wie ein Getränk oder auch eine Flüssigkeit, die kein Lebensmittel ist, wie Mineralöl oder dergleichen.

Es gibt im Stand der Technik zahlreiche Ansätze, die abgefüllte Menge mit einem Sensor zu bestimmen. Die Herausforderung besteht darin, die Mindestfüllmenge einzuhalten und zugleich möglichst wenig zu überschreiten. Daneben ist ein hoher und verlässlicher Durchsatz angestrebt. Mit einer Waage lässt sich die abgefüllte Masse direkt bestimmen. Durch ein Höhenmessgerät oder eine Füllstandmessung wird die Abfüllhöhe ermittelt, wofür verschiedene Sensoren bekannt sind. Alternativ wird in einer Zuleitung zu dem Behälter der Durchfluss gemessen und dementsprechend ein Ventil gesteuert. Für die Durchflussmessung gibt es zahlreiche Messprinzipien, wie Coriolis-Sensoren, magnetisch-induktive Durchflusssensoren für Medien mit einer Mindestleitfähigkeit, Ultraschall-Durchflusssensoren oder Vortex-Sensoren.

Große Abfüllanlagen werden oftmals als Rundabfüller aufgebaut. Dort befinden sich verschiedene elektronische Komponenten, wie Ventile, Durchflusssensoren für deren Steuerung oder Füllstandsensoren für die Pufferbehälter, in großer Anzahl auf einem sich drehenden Rondell. Dabei tritt das Problem auf, dass neben Energie auch Informationen zwischen dem drehenden und dem stationären Teil der Abfüllanlage übertragen werden müssen. Ein Rundabfüller umfasst typischerweise eine Größenordnung von 100 Abfüllstationen.

Herkömmlich werden zur Kommunikation zwischen den Durchflusssensoren und einer Steuerung auf dem Rundabfüller Impulssignale verwendet, die pro Impuls eine bestimmte durchgeflossene Menge signalisieren. Für die Übertragung der Impulssignale sind elektrische Leitungen von dem jeweiligen Sensor zu der Steuerung geführt. Das bedeutet einen hohen Verdrahtungsaufwand für jeden einzelnen Sensor. Außer den Impulssignalen können keine weiteren Diagnose- oder Prozessdaten übertragen werden. Um Quantisierungsfehler gering zu halten, sind hohe Pulsfrequenzen mit entsprechenden Anforderungen an die Hardware zu wählen.

In anderen Abfüllanlagen wird die CAN-Bus-Technologie verwendet, um mit den Sensoren und auch den Ventilen zu kommunizieren. Das bietet Echtzeiteigenschaften bei Übertragungsraten im Bereich von Mbit/s und Zykluszeiten im Millisekundenbereich. Allerdings benötigt ein CAN-Teilnehmer zwei Anschlussleitungen für die Versorgungsspannung und die davon separierte CAN-Kommunikation, so dass der Verdrahtungsaufwand sich sogar noch erhöht. Vergleichbare Nachteile ergeben sich bei anderen Kommunikationsprotokollen wie etwa Modbus, das auf RS485 basiert. Die Modbus-Technologie ist zudem auf Übertragungsragen im Bereich von kBit/s und eine Teilnehmerzahl von 32 begrenzt. Bei einer Datenübertragung als Differenzspannung auf einem Adernpaar und separaten Versorgungsleitungen bleibt der Verdrahtungsaufwand hoch.

Von einer auf dem rotierenden Teil eines Rundabfüllers befindlichen dezentralen Steuerung muss überdies eine Verbindung zu dem stationären Teil der Abfüllanlage geschaffen werden, wofür bisher Schleifringe eingesetzt werden. Das unterliegt nicht nur mechanischem Verschleiß, sondern bildet zudem einen Kommunikationsengpass, der den Austausch von Daten zwischen dem stationären und dem sich drehenden Teil der Anlage begrenzt, etwa für Diagnosen.

Aus der DE 10 2011 002 038 B3 ist ein Füllstandsensor für eine Abfüllanlage bekannt. Mehrere dieser Füllstandsensoren bilden einen Ringverbund mit einer Punkt-zu-Punkt-Kommunikation. Diese ist leitungsgebunden und überwindet daher die geschilderten Nachteile nicht.

Die DE 10 2013 106 103 A1 offenbart eine Getränkeabfüllvorrichtung. Deren Datenübertragung zwischen einer Auswertungsvorrichtung zum Bestimmen des Behältergewichts und dem Füllventil kann drahtlos sein. Auch in der DE 10 2018 133 390 A1 wird die Möglichkeit erwähnt, dass Steuersignale an das Ventil drahtlos erfolgen. Die Ansteuerung der Ventile betrifft aber nur einen kleinen Teil der möglichen Kommunikation, und überdies wäre ausgerechnet dieser Teil noch vergleichsweise einfach drahtgebunden zu lösen.

Die DE 10 2015 204 922 A1 betrifft den Datenaustausch zwischen einer Maschine und einem externen Steuermodul. Die Maschine kann unter vielen weiteren Beispielen eine Getränkeabfüllanlage sein. Eine Bedienschnittstelle der Maschine kann drahtlos angesprochen werden. Das ändert aber nichts an der Kommunikation innerhalb der Maschine.

Aus der DE 10 2018 208 788 A1 ist ein Übertragungsverfahren für ein mechatronisches System bekannt. Ein Drahtlosüberträger spannt ein drahtloses Netzwerk für eine drahtlose Kommunikation zwischen einer Maschinensteuerung und einer oder mehreren Komponenten des mechatronischen Systems auf. Dabei kann es sich um ein lokales Subnetz unter dem 5G-Mobilfunkstandard handeln. Abfüllanlagen sind mit Verpackungsmaschinen oder Pressen als Beispiele mit geringen oder mittleren Anforderungen an die Synchronisation genannt, wofür ein hochleistungsfähiges Netzwerk gerade nicht benötigt wird. Außerdem werden Abfüllanlagen nur einmalig erwähnt und in keiner Form beschrieben, welche Komponenten eine Abfüllanlage hat und wo hier Bedarf für anspruchsvolle Kommunikation bestehen könnte.

Die US 9 704 329 B2 beschreibt ein drahtloses Netzwerksystem für Getränkeverteiler, hier allerdings im Sinne von Getränkeautomaten und nicht Abfüllanlagen. Die Anforderungen an ein solches System und dessen Kommunikation sind gänzlich andere.

Die noch unveröffentlichte europäische Anmeldung mit dem Aktenzeichen 20212196.8 beschreibt ein Verfahren zur Steuerung eines Abfüllvorgangs, bei dem eine Zeitreihe von Messungen eines Durchflussmessers analysiert wird, um noch genauere Abfüllergebnisse zu erzielen. Das Dokument befasst sich aber nicht näher mit der Kommunikation innerhalb der Abfüllvorrichtung.

Aus der DE 10 2016 114 885 A1 ist ein Verfahren und eine Vorrichtung zum Befüllen von Behältern mit einem Füllgut bekannt. Die Vorrichtung gemäß dem Oberbegriff des Anspruchs 1 weist einen feststehenden und einen insbesondere rotativ bewegten Teil auf. Zur Steuerung des Füllvorgangs sind mitbewegte Sensoren und Ventilsteuereinrichtungen vorgesehen, die mit einem ebenfalls mitbewegten Kommunikationsmodul verbunden sind. Im feststehenden Teil befindet sich ein weiteres Kommunikationsmodul als Gegenstelle der damit etablierten drahtlosen Kommunikationsschnittstelle.

In der DE 10 2005 035 264 A1 wird eine Steuerung einer Abfüllung eines Mediums beschrieben. Dabei kann ein Durchflussmessgerät eines oder mehrere Ventile mittels eines analogen Ausgangs, mittels Buskommunikation, drahtlos oder mittels Schaltausgängen direkt ansprechen.

Die WO 2015/074763 A1 befasst sich mit einem Ventil, das ein optisches Kennzeichen umfasst, und einem Mobilgerät zu dessen Erfassung. Durch das optische Kennzeichen erfolgt eine Zuordnung der technischen Daten des Ventils zu seiner Position in der Prozessanlage. Gleichzeitig zur oder zeitlich aufeinanderfolgend auf die optische Abtastung ist eine drahtlose Datenverbindung zwischen der Ventilsteuerung und dem Mobilgerät herstellbar, um einen Ventildatensatz auf das Mobilgerät zu übertragen.

Es ist daher Aufgabe der Erfindung, eine gattungsgemäße Abfüllanlage zu verbessern.

Diese Aufgabe wird durch eine Abfüllvorrichtung und ein Verfahren zum Abfüllen eines Mediums, insbesondere einer Flüssigkeit, nach Anspruch 1 beziehungsweise 13 gelöst.

Die Abfüllvorrichtung umfasst eine Sockeleinrichtung, d.h. einen stationären Teil, mit einer Anlagensteuerung. Ein als Rondell oder Rondelleinrichtung bezeichnetes Teil bewegt sich gegenüber der Sockeleinrichtung und damit der Anlagensteuerung. Eine Abfüllanlage mit einem sich drehenden Rondell wird auch als Rundabfüller bezeichnet.

In der Rondelleinrichtung ist eine Vielzahl von Abfüllstationen vorgesehen, die jeweils mindestens ein Ventil, eine Abfüllstationssteuerung für das Ventil und somit für den Abfüllvorgang durch passendes Öffnen und Schließen des Ventils sowie einen Sensor aufweist, der Sensordaten über den Abfüllvorgang erfasst, um erforderlichenfalls ein korrigierendes Einwirken auf das Ventil zu ermöglichen. Das Ventil kann Zwischenstellungen zwischen offen und geschlossen einnehmen. Die jeweilige Abfüllstationssteuerung kann als eigener Baustein in den Sensor integriert oder in einer Steuerung der Rondelleinrichtung implementiert sein.

Die Abfüllmenge wird beispielsweise als Volumen vorgegeben, mit dem der Behälter in dem Abfüllvorgang mit dem Medium befüllt werden soll. Der Sensor ist vorzugsweise ein Durchflussmesser, der integrierte Durchfluss beispielsweise in einer Zuleitung zu dem Behälter ergibt dann die bisherige Abfüllmenge zu jedem Zeitpunkt des Abfüllvorgangs. Der Abfüllvorgang kann dann beendet werden, sobald die bereits abgefüllte Abfüllmenge eine vorgegebene Abfüllmenge erreicht. Dabei wird vorzugsweise noch eine Nachlaufmenge von Medium berücksichtigt, das nach dem Beenden des Abfüllvorgangs noch in den Behälter strömen wird. Alternativ zu einem Durchflussmesser wird ein anderer Sensor eingesetzt, insbesondere einer der einleitend genannten.

Die Erfindung geht von dem Grundgedanken aus, zwischen dem stationären und bewegten Teil, d.h. der Anlagensteuerung und Komponenten der Rondelleinrichtung, beziehungsweise innerhalb des bewegten Teils, d.h. zwischen Komponenten der Rondelleinrichtung, eine drahtlose Kommunikation zu verwenden. Eine beliebige drahtlose Kommunikation würde aber für die Anforderungen in einer Abfüllvorrichtung nicht genügen. Daher wird der Mobilfunkstandard 5G verwendet. Es könnten, allerdings nicht erfindungsgemäß, auch andere Standards verwendet werden.

Unter den heute bekannten Standards kommt dafür noch WiFi 6 in Betracht, für das zumindest ähnlich kurze Latenzen in Aussicht stehen. Es ist aber noch gänzlich offen, inwieweit sich WiFi 6 in der Industrie durchsetzen wird. Eingeschlossen in den Begriff 5G sind jedenfalls Nachfolgestandards, an 6G wird bereits gearbeitet.

Es ist erfindungsgemäß nicht erforderlich, dass jegliche Kommunikation der Abfüllvorrichtung unter 5G erfolgt, ebenso wenig müssen sämtliche Komponenten Schnittstellen für 5G-Kommunikation aufweisen. Ein Teil der Kommunikation kann weiterhin andere, auch drahtgebundene Übertragungen und Protokolle nutzen. Dies wird anhand noch vorzustellender Ausführungsformen verdeutlicht.

Die Erfindung hat den Vorteil, dass eine Kommunikation ermöglicht wird, die die einleitend genannten Nachteile vermeidet. Es wird eine Kommunikationslösung geschaffen, um kostengünstig mehr Informationen zwischen den diversen Komponenten der Abfüllvorrichtung auszutauschen. Dabei können transparente Netzwerke bis zur Ebene von Sensoren und Aktoren erzeugt werden. Durch weniger Verkabelung und weniger Hardwareeinsatz verringern sich die Kosten und die Systemkomplexität.

Die Anlagensteuerung weist bevorzugt eine 5G-Basisstation auf, insbesondere für ein privates Netz der Abfüllvorrichtung. Die Zuordnung der Basisstation zur Anlagensteuerung ist funktional zu verstehen. Die jeweilige Hardware kann einen auch beträchtlichen räumlichen Abstand haben, was unter anderem Freiheiten lässt, die Antenne der Basisstation an eine geeignete Stelle zu versetzen oder die Maschinensteuerung vom Ort der Abfüllvorrichtung selbst zu separieren. Alternativ zu einer eigenen Basisstation könnte die Abfüllvorrichtung ein öffentliches 5G-Netz oder ein im Einzugsbereich der Anlage bestehendes sonstiges 5G-Netz mitnutzen.

Die Rondelleinrichtung weist bevorzugt eine dezentrale zweite Steuerung auf, die insbesondere über eine drahtlose Verbindung nach dem Mobilfunkstandard 5G mit der Anlagensteuerung in Verbindung steht. Die zweite Steuerung kümmert sich vorzugsweise dezentral um diejenigen Steuerungsaufgaben, die von einer mitbewegten Position besser bedient werden können. Sie koordiniert bevorzugt die Abfüllstationen, soweit diese sich nicht selbst steuern.

Die zweite Steuerung weist bevorzugt mindestens eine Abfüllstationssteuerung auf. Sie stellt damit die Steuerungsfunktionalität für mindestens eine Abfüllstation zur Verfügung. Die Abfüllstationssteuerung kann aber auch ein Teil der Abfüllstation selbst, insbesondere in deren Sensor integriert sein. Wenn hier und im Folgenden Eigenschaften der Abfüllstationen oder von deren Komponenten beschrieben werden, dann ist damit vorzugsweise eine einheitliche Lösung gemeint, bei der alle Abfüllstationen gleichartig ausgebildet sind. Sofern also die zweite Steuerung eine Abfüllstationssteuerung umfasst, steuert sie vorzugsweise alle Abfüllstationssteuerungen. Wird diese Funktionalität umgekehrt von den Abfüllstationen selbst oder deren Sensoren übernommen, weist vorzugsweise jede Abfüllstation ihre eigene Abfüllstationssteuerung auf. Andererseits sind aber heterogene Lösungen zunächst nicht ausgeschlossen. Das würde hier bedeuten, dass die zweite Steuerung einen Teil der Abfüllstationssteuerung umfasst und ein anderer Teil der Abfüllstationssteuerungen in den Abfüllstationen selbst beziehungsweise deren Sensoren implementiert ist. Es gibt dann mindestens zwei Klassen von Sensoren mit unterschiedlicher Autarkie und Intelligenz.

Mindestens ein Sensor und/oder mindestens ein Ventil weist bevorzugt eine 5G-Schnittstelle auf. Damit sind verschiedene Kommunikationen vorstellbar. In einer Ausführungsform werden die Sensoren und/oder Ventile unmittelbar per 5G von der Anlagensteuerung angesprochen. Eine zweite Steuerung ist dann vorzugsweise gar nicht mehr vorgesehen oder jedenfalls nicht mehr für die Steuerung der Ventile für Abfüllvorgänge zuständig. In anderen Ausführungsformen kommunizieren die Sensoren und/oder Ventile doch mit einer zweiten Steuerung, oder sie kommunizieren untereinander, insbesondere Sensor und Ventil einer jeweiligen Abfüllstation miteinander. Erneut ist eine einheitliche Ausführungsform bevorzugt, in der alle Sensoren und/oder Ventile gleichermaßen eine 5G-Schnittstelle aufweisen oder nicht aufweisen. Heterogene Lösungen sind aber vorstellbar, in der einige Sensoren und/oder Ventile eine 5G-Schnittstelle aufweisen und andere nicht. Insbesondere fungiert dann mindestens ein Sensor und/oder Ventil als 5G-Kommunikationsvermittler für mindestens einen anderen Sensor und/oder ein anderes Ventil ohne eigene 5G-Schnittstelle, insbesondere mit drahtgebundener Verbindung untereinander.

Die Sensoren weisen bevorzugt jeweils eine 5G-Schnittstelle auf, und innerhalb einer Abfüllstation ist deren Sensor mit deren Ventil zur Ansteuerung des Ventils verbunden. Das ist ein Spezialfall einer einheitlichen Lösung. Die Ventile haben hierbei vorzugsweise keine eigene 5G-Schnittstelle, die sie nicht benötigen, weil sie direkt von dem jeweiligen Sensor der eigenen Abfüllstation angesteuert werden. Das vermeidet unnötige 5G-Schnittstellen und unnötigen 5G-Datenverkehr, denn die drahtgebundene Verbindung ist kurz und direkt und bietet besonders kurze Latenzen.

Die Abfüllstationssteuerung ist bevorzugt dafür ausgebildet, das Ventil zu schließen und in mindestens zwei unterschiedlichen Stellungen zu öffnen. Die beiden Ventilstellungen entsprechen einem hohen und einem niedrigen Durchfluss. Der Abfüllvorgang kann auf diese Weise feiner gesteuert werden. Mehr als zwei Abstufungen sind möglich. Alternativ kann das Ventil lediglich geöffnet und geschlossen werden.

Die Anlagensteuerung ist dafür ausgebildet, automatisch eine physische Position eines Sensors in der Rondelleinrichtung und eine Netzwerkadresse des Sensors in dem 5G-Netzwerk einander zuzuordnen. Die Zuordnung erfolgt vorzugsweise für alle Abfüllstationen beziehungsweise Sensoren. Damit lässt sich sicherstellen, dass die 5G-Kommunikation die Sensoren, Ventile und Abfüllstationen an den gewünschten physischen Orten erreicht, beziehungsweise Information von dort mit dem richtigen Ort verknüpft wird. Für den Aufbau eines 5G-Netzes sind Verfahren bekannt, mit denen sich die Teilnehmer zu einem Netzwerk verbinden. Danach ist aber noch nicht klar, wo sich der jeweilige Teilnehmer physisch befindet. Eine Automatisierung dieser Zuordnung erleichtert die Inbetriebnahme und Wartung erheblich.

Bevorzugt weist ein jeweiliger Sensor eine Codierung mit einer Identifikationsinformation auf, insbesondere einen optischen Code, eine NFC-Kennung oder einen RFID-Code, wobei die Abfüllvorrichtung mindestens vorübergehend eine Leseeinrichtung für die Codierung aufweist, und wobei insbesondere die Anlagensteuerung für eine Inbetriebnahmephase ausgebildet ist, in der die Sensoren an der Leseeinrichtung vorbeigeführt werden, um die Sensoren in ihren physischen Positionen zu identifizieren. Die Sensoren sind dank der Codierung identifizierbar, sofern diese mit einer geeigneten Leseeinrichtung erfasst wird. Die Abfüllanlage benötigt eine solche Leseeinrichtung nur in seltenen Situationen wie Inbetriebnahme und Wartung, so dass die Leseeinrichtung auch nur temporär vorgesehen sein kann. In einem vorteilhaften Szenario werden alle Sensoren anfangs einmal an der Leseeinrichtung vorbeigeführt, dadurch nacheinander identifiziert und so ihrem physischen Ort zugeordnet. Eine NFC-Kennung hat den Vorteil, dass dies nur bei großer Nähe ausgelesen werden kann und damit Verwechslungen schon prinzipbedingt jedenfalls weitgehend ausgeschlossen werden können.

Die Anlagensteuerung ist für eine Inbetriebnahmephase ausgebildet, in der die Ventile in bekannter Abfolge geöffnet und dabei Sensordaten der Sensoren erfasst werden, um anhand eines jeweils geöffneten Ventils und der Sensordaten den Sensor und das Ventil einer Abfüllstation einander zuzuordnen. Das ist ein alternatives automatisches Zuordnen zu einem Einlesen von Codes. Das jeweils geöffnete Ventil wird von dem zugehörigen Sensor derselben Abfüllstation erkannt, und so können Sensoren den

Ventilen und Abfüllstationen und deren physischen Orten auf der Rondelleinrichtung zugeordnet werden. Die Teilbefüllung während dieser Identifizierung kann anschließend zu einer vollständigen Befüllung fortgesetzt werden.

Alternativ, aber nicht erfindungsgemäß, ist auch eine händische Zuordnung denkbar, wofür Codierungen ebenfalls genutzt werden können, die mit dem Auge oder einem Handgerät gelesen werden. Das bedeutet aber einen nicht unerheblichen Zusatzaufwand. Nochmals alternativ ist die Zuordnung im Sensor gespeichert. Dazu muss dies aber parametriert oder der Sensor ganz gezielt an seiner vorgesehenen Position montiert werden.

Die Anlagensteuerung löst bevorzugt einen Abfüllvorgang durch eine Nachricht mit einem gewünschten Zeitpunkt aus, der dann dezentral von der Abfüllstationssteuerung durchgeführt wird. Die Anlagensteuerung gibt also keine Startsignale, die aufgrund von Latenzen womöglich nicht fehlerfrei umgesetzt würden. Stattdessen gibt sie der dezentralen Abfüllstationssteuerung eine Anweisung, die diese dann selbständig umsetzt. Dafür ist eine Synchronisation der 5G-Teilnehmer der Abfüllvorrichtung erforderlich, aber derartige Synchronisierungsverfahren in einem 5G-Netz sind an sich bekannt.

Die Sensoren weisen bevorzugt jeweils eine 5G-Schnittstelle auf und kommunizieren miteinander, um den Abfüllvorgang der eigenen Abfüllstation auch anhand von Sensordaten anderer Abfüllstationen zu steuern. Eine jeweils eigene 5G-Schnittstelle haben die Sensoren bereits in anderen vorteilhaften Ausführungsformen. Hier wird das für eine Sensorfusion genutzt, in der Sensoren ihre Sensordaten bündeln und gemeinsam auswerten. So wird der eigene Abfüllvorgang anhand der Abfüllvorgänge an anderen Abfüllstationen optimiert.

Die Sensoren sind bevorzugt dafür ausgebildet, in den Abfüllvorgang der eigenen Abfüllstation Sensordaten bestimmter, insbesondere benachbarter Abfüllstationen einzubeziehen, und die bestimmten Abfüllstationen vorab dadurch aufzufinden, dass die Anlagensteuerung eine Topologie der vorhandenen Sensoren an den Sensor kommuniziert. Die Sensorfusion erfolgt vorzugsweise über bestimmte relevante Cluster von Sensoren, insbesondere Nachbarschaften. Dafür muss ein Sensor die relevanten anderen Sensoren kennen. Das findet der Sensor in dieser bevorzugten Ausführungsform anhand der von der Anlagensteuerung übergebenen Topologie selbst heraus. Alternativ gibt die Anlagensteuerung direkt die bestimmten Sensoren vor.

Die Abfüllstationssteuerung ist bevorzugt dafür ausgebildet, bei Unterbrechung der 5G-Kommunikation einen Abfüllvorgang noch zu Ende zu bringen und/oder keinen neuen Abfüllvorgang zu starten. Eine Unterbrechung der Funkverbindung sollte nicht zu Problemen und schon gar nicht zu Gefährdungen führen. Den aktuellen Abfüllvorgang kann die Abfüllstationssteuerung aber noch autark beenden. Alternativ wird das Ventil sofort geschlossen. Einen weiteren Abfüllvorgang startet die Abfüllstationssteuerung vorzugsweise nicht mehr, d.h. ein geschlossenes Ventil wird nicht mehr geöffnet. Sofern das Ventil selbst ausschließlich mittels 5G ansprechbar ist, sollte es vorzugsweise im Falle eines Abbruchs der Funkverbindung sofort schließen.

Das erfindungsgemäße Verfahren kann auf ähnliche Weise weitergebildet werden und zeigt dabei ähnliche Vorteile. Derartige vorteilhafte Merkmale sind in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer einzelnen Abfüllstation;
- Fig. 2: eine schematische Übersichtsdarstellung einer Abfüllvorrichtung mit einer Vielzahl von Abfüllstationen;
- Fig. 3: eine schematische Darstellung der 5G-Kommunikationstopologie, in der die Sensoren die Kommunikationsteilnehmer sind und direkt die zugehörigen Ventile ansteuern;
- Fig. 4: eine schematische Darstellung einer weiteren 5G-Kommunikationstopologie, in der sowohl die Sensoren als auch die Ventile sowie eine zweite dezentrale Steuerung Kommunikationsteilnehmer sind; und
- Fig. 5: eine schematische Darstellung einer weiteren 5G-Kommunikationstopologie, in der die Sensoren und eine zweite dezentrale Steuerung Kommunikationsteilnehmer sind und die Ventile von der zweiten dezentralen Steuerung angesteuert werden.

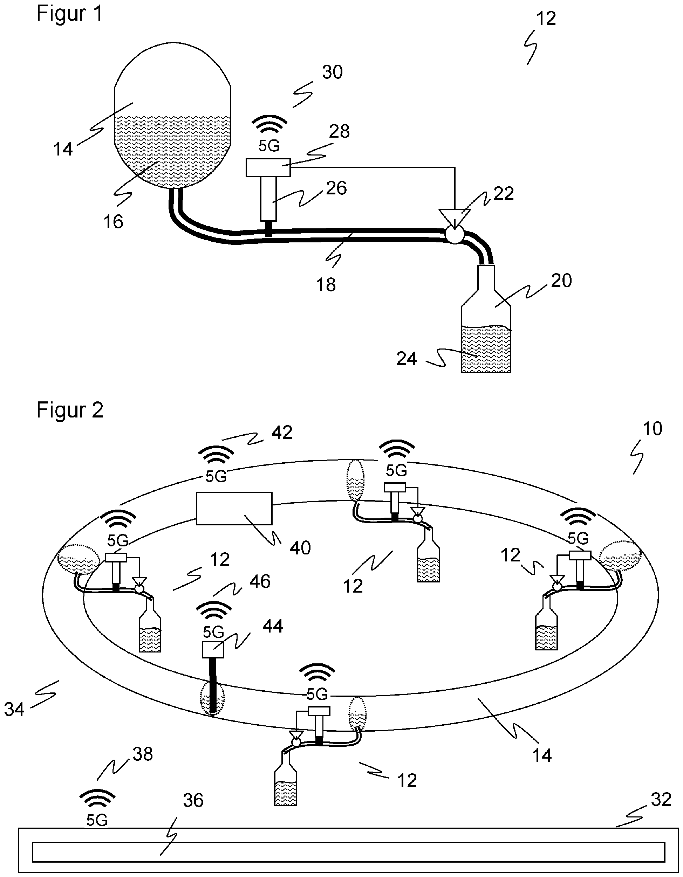

Figur 1 zeigt eine schematische Darstellung einer einzelnen Abfüllstation 12. Aus einem Vorratsbehälter 14 strömt Medium 16 über eine Zuleitung 18 in einen Behälter 20. Das Medium 16 ist eine Flüssigkeit, beispielsweise ein Getränk, kann aber auch zähflüssig und allgemein ein beliebiges strömungsfähiges Medium sein. Als Behälter 20 ist eine

Flasche dargestellt, die ebenfalls nur stellvertretend für beliebige, das Medium 16 aufnehmende Behälter steht. In der Praxis wird, wie später noch unter Bezugnahme auf die Figur 2 erläutert, nicht nur ein einziger Behälter 20 gefüllt, sondern es gibt eine Vielzahl von Abfüllstationen 12, die parallel eine Vielzahl von Behältern 20 befüllen, so dass sich die gezeigte Anordnung an dem einen Vorratsbehälter 14 oder mit mehreren Vorratsbehältern in mehreren Abfüllsträngen vervielfacht.

Ziel eines Abfüllvorgangs ist es, eine genau vorgegebene Menge des Mediums 16 in den Behälter 20 zu füllen. Diese Vorgabe kann als Volumen angegeben sein, etwa genau 1 I, ebenso als Masse, die bei bekanntem Medium 16 über die Dichte zum Volumen proportional ist, oder eine sonstige geeignete Größe. Der Abfüllvorgang wird durch Öffnen eines Ventils 22 gestartet und durch dessen Schließen beendet. Um den richtigen Zeitpunkt zum Schließen des Ventils 22 zu finden, wird die bereits abgefüllte Menge 24 des Mediums 16 in dem Behälter 20 bestimmt. Diese Messung erfolgt in der Ausführungsform nach Figur 1 indirekt, indem ein als Durchflussmesser ausgebildeter Sensor 26 die Durchflussrate in der Zuleitung 18 misst, also eine Menge oder eine Masse, die pro Zeiteinheit durch den Querschnitt der Zuleitung 18 strömt. Der Sensor 26 kann für die Durchflussmessung ein beliebiges Messprinzip verwirklichen, insbesondere einer der einleitend schon genannten Coriolis-Sensoren, magnetisch-induktive Durchflusssensoren für ein Medium 16 mit einer Mindestleitfähigkeit, Ultraschall-Durchflusssensoren oder Vortex-Sensoren sein. In alternativen, nicht dargestellten Ausführungsformen wird nicht der Durchfluss bestimmt, sondern ein Sensor zur Bestimmung einer anderen Messgröße verwendet, der insbesondere an dem Behälter 20 angeordnet ist, beispielsweise den Füllstand oder das Füllgewicht der abgefüllten Menge 24 misst.

Der Abfüllvorgang wird von einer Abfüllstationssteuerung 28 gesteuert. In der Ausführungsform gemäß Figur 1 ist die Abfüllstationssteuerung 28 in den Sensor 26 integriert. Alternativ kann sie ein eigener Baustein der Abfüllstation 12, Teil des Ventils 22 oder über Komponenten der Abfüllstation 12 verteilt implementiert sein. Eine weitere Alternative ist eine Implementierung in einer anderen Abfüllstation, einer übergeordneten Steuerung oder eine über mehrere Abfüllstationen und/oder eine übergeordnete Steuerung verteilte Implementierung. In einem Abfüllvorgang wird nach Anschluss und Druckausgleich des Behälters 20 das Ventil 22 geöffnet. Das Strömungsverhalten während des Abfüllvorgangs kann durch mindestens zwei unterschiedliche Öffnungszustände und damit Strömungsgeschwindigkeiten verbessert werden. Der Sensor 26 überwacht die abgefüllte Menge 24, damit das Ventil 22 zum richtigen Zeitpunkt geschlossen wird. Die abgefüllte Menge 24 entspricht dem Integral der Durchflussrate über den Zeitraum des Abfüllvorgangs. Zu beachten ist hierbei, dass mit der Ansteuerung des Ventils 22 zum Schließen das Strömen des Mediums 16 nicht sofort unterbunden wird. Das in dieser Phase beim Schließen des Ventils 22 nachströmende Medium 16 kann als Nachlaufmenge geschätzt oder aus früheren Messungen bestimmt und der Zeitpunkt zum Schlie-ßen entsprechend vorverlagert werden.

Die Kommunikation mit der Abfüllstation 12 erfolgt drahtlos über den Mobilfunkstandard 5G. Dazu weist in der dargestellten Ausführungsform der Sensor 26 beziehungsweise die hier darin integrierte Abfüllstationssteuerung 28 eine 5G-Schnittstelle 30 beziehungsweise ein 5G-Modem auf. Das ist nur eine beispielhafte Möglichkeit für eine 5G-Kommunikation in einer Abfüllvorrichtung, es werden noch verschiedene Ausführungsformen vorgestellt, welche Komponenten Teilnehmer in einem 5G-Netz sind und welche Komponenten auf andere Weise eingebunden werden, wie im Beispiel der Figur 1 das Ventil 22 durch direkte drahtgebundene Verbindung zu der Abfüllstationssteuerung 28 des Sensors 26.

Ein Vorteil der 5G-Kommunikation ist deren geringe Latenz. Es lässt sich abschätzen, welche zeitliche Präzision für das Schließen des Ventils 22 benötigt wird. Abfüllvorgänge erfolgen in der Regel in einem Zeitbereich von einigen Sekunden, innerhalb derer ein Volumen von grob einem Liter abgefüllt wird. Bei einer hingenommenen Ungenauigkeit von einigen Millilitern pro abgefülltem Liter ergibt sich eine höchstens zulässige zeitliche Ungenauigkeit im unteren einstelligen Millisekundenbereich. Eine Latenz von 1 ms und weniger kann 5G leisten, und zudem unterstützt es die robuste Koexistenz einer Vielzahl von Teilnehmern. Komponenten mit einer 5G-Schnittstelle können überdies einfach installiert und in Betrieb genommen werden, sie ermöglichen Echtzeitkommunikation und funktionieren auch in Relativbewegung der Teilnehmer. Als physikalische Schicht der Kommunikation ist auch WiFi 6 vorstellbar, wenn auch nicht erfindungsgemäß, denn bei dieser Übertragung werden ebenfalls zahlreiche Teilnehmer bei geringen Latenzen ermöglicht. Allerdings sind die Latenzen hier eher im höheren einstelligen Millisekundenbereich.

Figur 2 zeigt eine schematische Übersichtsdarstellung einer Abfüllvorrichtung 10 mit einer Vielzahl von Abfüllstationen 12. In einer ganz groben Aufteilung können ein Sockel 32 und ein dagegen bewegliches Rondell 34 mit den Abfüllstationen 12 unterschieden werden. Mit Sockel 32 sind sämtliche stationären Komponenten der Abfüllvorrichtung 10 bezeichnet, die an sich bekannt sind und auf die hier nicht näher eingegangen wird.

Konkret gezeigt ist einzig eine Anlagensteuerung 36, die eine 5G-Schnittstelle 38 aufweist. Die räumliche Anordnung und Ausdehnung des Sockels 32 ist rein schematisch, und die Hardware der Anlagensteuerung 36 kann sich an einem im Prinzip beliebigen Ort befinden, solange die Verbindung schnell genug ist und die Antenne oder die Antennen der 5G-Schnittstelle 38 in gutem Kontakt zu dem Rondell 34 stehen.

Eine einzelne der Abfüllstationen 12 in dem Rondell 34 wurde bereits unter Bezugnahme auf die Figur 1 beschrieben, und deshalb sind die Einzelkomponenten in Figur 2 nicht mehr mit eigenen Bezugszeichen versehen. Vorzugsweise sind alle Abfüllstationen 12 untereinander gleichartig ausgebildet, es sind aber auch abweichend heterogene Lösungen vorstellbar, insbesondere durch nur teilweise Reparatur oder Aufrüstung von Abfüllstationen 12. In der Praxis weist das Rondell 34 nicht nur vier Abfüllstationen zwölf auf wie dargestellt, sondern sehr viel mehr, beispielsweise 80 bis 100 oder sogar bis zu 180 und mehr.

An dem Rondell 34 ist weiterhin eine dezentrale Steuerung 40 mit einer eigenen 5G-Schnittstelle 42 angeordnet. Sie ist für die Steuerungsaufgaben innerhalb des Rondells 34 zuständig, etwa die Überwachung des noch verfügbaren Mediums 16 in dem Vorratsbehälter 14. Die entsprechenden Messdaten liefert beispielsweise mindestens ein Füllstandsensor 44 für den Vorratsbehälter 14, der ebenfalls eine eigene 5G-Schnittstelle 46 aufweisen kann.

Das Rondell 34 befindet sich in Bewegung gegenüber dem Sockel 32, vorzugsweise einer Drehbewegung. Daher wäre eine drahtgebundene Kommunikation zwischen der Anlagensteuerung 36 und der dezentralen Steuerung 40 nicht möglich und bedarf eines Schleifrings mit entsprechendem Aufwand, begrenzter Bandbreite und mechanischer Anfälligkeit. Mit einer 5G-Kommunikation gibt es diese Probleme nicht. Innerhalb des Rondells 34 wäre eine drahtgebundene Kommunikation denkbar, aber der Aufwand ist enorm. Deshalb wird erfindungsgemäß eine 5G-Kommunikationslösung zwischen den diversen Komponenten des Rondells 34 und/oder zwischen Sockel 32 und Rondell 34 eingesetzt.

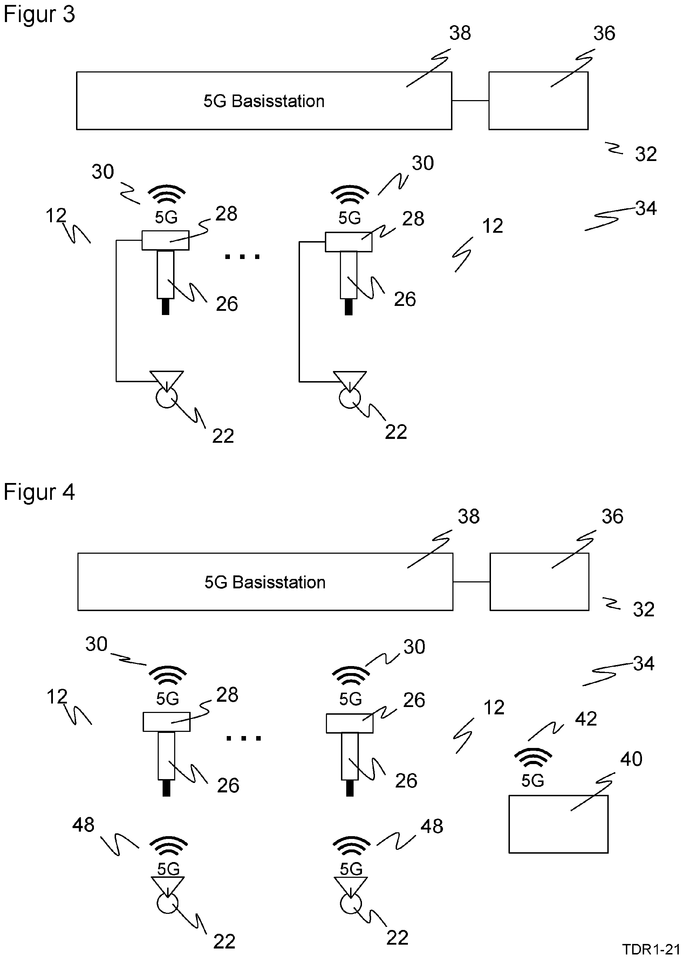

Welche Komponenten an der 5G-Kommunikation teilnehmen, unterscheidet sich zwischen den Ausführungsformen der Erfindung. In Figur 2 sind die Abfüllstationen 12 jeweils in das 5G-Netz eingebunden, und zwar über die Sensoren 26. Es können alternativ andere, auch mehrere und zusätzliche Komponenten der Abfüllstationen 12 sein, die eine 5G-Schnittstelle aufweisen. In einer wiederum alternativen Ausführungsform ist nur die dezentrale Steuerung 40 mit einer 5G-Schnittstelle ausgerüstet, während intern in dem Rondell 34 auf anderem Weg kommuniziert wird. In einer nochmals anderen Ausführungsform gibt es die dezentrale Steuerung 40 gar nicht, oder sie ist jedenfalls nicht für die Abfüllvorgänge zuständig, die autark in den Abfüllstationen 12 gesteuert werden. Die dezentrale Steuerung 40 kümmert sich dann um andere Aufgaben, wie die Überwachung des Vorratsbehälter 14 mittels über 5G oder auf anderem Wege angeschlossenen Füllstandsensoren 44. So entsteht in vielen denkbaren Varianten eine 5G-Kommunikationslösung zwischen den Sensoren 26, den Ventilen 22, dem Füllstandsensor 44 des Vorratsbehälters 14, der dezentralen Steuerung 40 und/oder der Anlagensteuerung 36, von denen nun einige unter Bezugnahme auf die Figuren 3 bis 5 näher vorgestellt werden.

Figur 3 zeigt eine 5G-Kommunikationstopologie, in der die Sensoren 26 die 5G-Kommunikationsteilnehmer sind. Die Darstellungen sind von nun an anders als in Figur 2 rein abstrakt. Die Ventile 22 sind direkt über drahtgebundene Verbindungen an die jeweiligen Sensoren 26 der zugehörigen Abfüllstation 12 angeschlossen und benötigen daher kein eigenes 5G-Modem. Der Sensor 26 beziehungsweise dessen Abfüllstationssteuerung 28 löst die Echtzeitanforderungen für den Abfüllvorgang und die Ansteuerung des Ventils 22 anhand seiner Messwerte und hinterlegten Algorithmen selbst. Wie schon erläutert, kann die Steuerung des Ventils 22 über ein einfaches Öffnen am Anfang und Schließen am Ende des Abfüllvorgangs hinausgehen und mindestens zwei unterschiedliche Ventilstellungen und damit Strömungsgeschwindigkeiten umfassen. Eine alternative Steuerungsmöglichkeit besteht darin, dass die jeweiligen Ventilansteuerungen von der Anlagensteuerung 36 erzeugt und als Befehl an den Sensor 26 übertragen werden. Die 5G-Technologie ist leistungsfähig genug, diese echtzeitkritischen Informationen zeitgerecht zu übertragen.

Die Kommunikation zwischen stationärem Sockel 32 und dagegen bewegtem Rondell 34 erfolgt mittels 5G. Dazu ist vorzugsweise die 5G-Schnittstelle 38 der Anlagensteuerung 36 als 5G-Basisstation ausgebildet. Dadurch kann ein privates 5G-Netz für die Abfüllvorrichtung 10 aufgebaut werden, um geringste Latenzzeiten und Störeinflüsse zu erzielen, wobei vorzugsweise, soweit praktisch umsetzbar, nur die Abfüllvorrichtung 10 von den 5G-Signalen ausgeleuchtet wird. Alternativ ist in der Abfüllvorrichtung 10 keine eigene Basisstation vorgesehen, sondern es wird ein anderes 5G-Netz genutzt.

In dem Rondell sind die Teilnehmer der 5G-Kommunikation in dieser Ausführungsform die Abfüllstationen 12 beziehungsweise deren Sensoren 26, ohne Vermittlung einer dezentralen Steuerung 40. Es kann aber abweichend eine ergänzende dezentrale Steuerung 40 geben, die zumindest einige Funktionen der Anlagensteuerung 36 lokal übernimmt oder vermittelt.

Figur 4 zeigt eine 5G-Kommunikationstopologie in einer weiteren Ausführungsform, in der auch die Ventile 22 mit einer 5G-Schnittstelle 48 ausgerüstet sind. Damit sind sowohl die Sensoren 26 als auch die Ventile 22 der Abfüllstationen 12 in das 5G-Netz eingebunden. Auch die dezentrale Steuerung 40 nimmt an der 5G-Kommunikation teil. Sie ist für verbleibende drahtgebundene Sensoren und Aktoren zuständig, wie den Füllstandsensor 44, kann aber auch zusätzliche Funktionen übernehmen, bis hin zu einer Implementierung der Abfüllstationssteuerungen 28. Die Tatsache, dass in Figur 4 die dezentrale Steuerung 40 vorhanden ist und in Figur 3 nicht, ist rein beispielhaft zu verstehen, sie ist in beiden Fällen optional.

In der Ausführungsform gemäß Figur 4 sind alle Sensoren 26 und Aktoren 22 der Abfüllstationen 12 mittels 5G vernetzt. Die jeweiligen Steuerungsbefehle an die Ventile 22 kommen vorzugsweise von dem zugehörigen Sensor 26 der jeweiligen Abfüllstation 12. Ebenso können die Ventile 22 von der dezentralen Steuerung 40 oder der Anlagensteuerung 36 angesteuert werden. Allgemein kann die Steuerungsfunktionalität praktisch beliebig über die Abfüllstationen, eine etwaige dezentrale Steuerung und die Anlagensteuerung 36 verteilt sein. Beispielsweise kann es einen mächtigeren Sensor 26 in einer Abfüllstation 12 geben, oder mehrere davon in einigen Abfüllstationen, der als Abfüllstationssteuerung 28 für mehr als eine Abfüllstation 12 fungiert und somit auch Ventile 22 anderer Abfüllstationen 12 mittels 5G ansteuert.

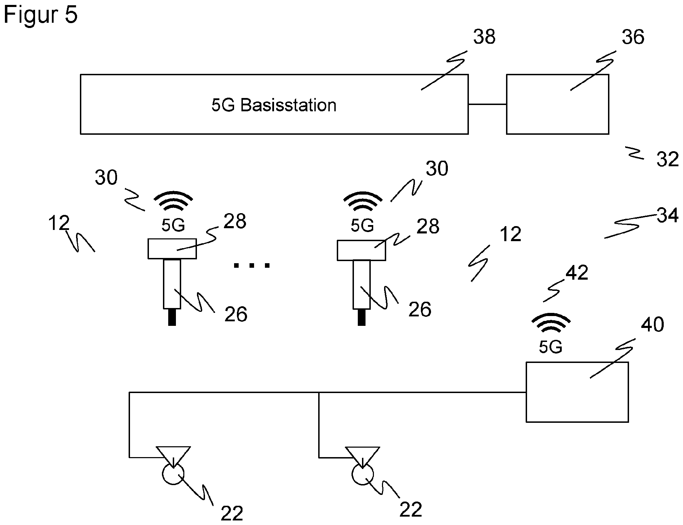

Figur 5 zeigt eine 5G-Kommunikationstopologie in einer weiteren Ausführungsform, in der nun die Ventile 22 drahtgebunden an die dezentrale Steuerung 40 angeschlossen sind. Dies soll illustrieren, dass Teile der Kommunikation weiterhin anders denkbar sind als mittels 5G. Allerdings ist eine direkte Verbindung zwischen den Sensoren 26 und den Ventilen 22 wie in Figur 3 in der Regel vorteilhafter. Die Ausführungsform gemäß Figur 5 ist dafür auch umsetzbar, wenn die Sensoren 26 auf ihre Messaufgabe spezialisiert sind und keine Steuerbefehle erzeugen können.

Die unter Bezugnahme auf die Figuren 3 bis 5 erläuterten Ausführungsformen sind keinesfalls abschließend zu verstehen. Es sind zahlreiche Mischformen vorstellbar, sei es gezielt oder nach einem nur teilweisen Umrüsten. Dabei sind einheitliche Ausführungsformen, in denen die Abfüllstationen 12 untereinander gleichartig ausgebildet sind, übersichtlicher und daher häufig bevorzugt. Dennoch sind auch heterogene Ausführungsformen möglich, in denen beispielsweise nur einige Sensoren 26 und/oder Ventile 22 über 5G angebunden sind und andere über direkte Drahtverbindungen, oder in denen einige Sensoren 26 und/oder Ventile 22 mächtiger sind und mit zusätzlicher Funktionalität zur Kommunikation und/oder Steuerung für eine Zuständigkeit für mehrere Abfüllstationen 12 ausgestattet sind.

Für eine reibungslose 5G-Kommunkation in der Abfüllvorrichtung 10 sollten die Adressen innerhalb des 5G-Netzwerks physisch den richtigen Komponenten zugeordnet sein. Der 5G-Mobilfunkstandard kennt Verfahren, wie den Teilnehmern innerhalb des Netzwerks automatisch eindeutige Adressen zugewiesen werden. Damit sind die Teilnehmer eindeutig ansprechbar, aber es ist noch nicht klar, wo sie sich in der realen Welt befinden. Dies wird am Beispiel der Sensoren 26 als Teilnehmer erläutert. Die Sensordaten sollten der richtigen Abfüllstation 12 zugeordnet werden, und Steuerbefehle des Sensors 26 sollten das richtige Ventil 22 betreffen. Auch eine vorteilhafte Sensor-zu-Sensor-Kommunikation für eine Sensorfusion setzt eine eindeutige Zuordnung innerhalb des Rondells 34 voraus. Die Zuordnung ist ferner vorzugsweise jederzeit prüfbar, etwa bei einem Sensortausch.

Vorzugsweise ist dazu jeder Sensor 26 mit einer Codierung versehen, die den Sensor 26 individualisiert und die beispielsweise ein optischer Code ist, wie ein Barcode oder ein 2D-Code, oder ein RFID-Tag oder dergleichen. Mit Hilfe eines passenden Lesegeräts, das zumindest in diesem Inbetriebnahmeschritt an einer festen Position verbleibt, können bei einer Umdrehung des Rundabfüllers alle Codes eingelesen werden, um so die gewünschte Zuordnung anhand der Abfolge der eingelesenen Codes automatisch zu leisten. Das Lesegerät kann wiederum eine 5G-Schnittstelle aufweisen, um die gelesenen Codeinformationen an die Anlagensteuerung 36 oder sonstige zuständige Stelle der Abfüllvorrichtung 10 zu übertragen.

Die Zuordnung ist ebenso manuell möglich. Der Einrichter orientiert sich an einem Individualisierungsmerkmal des jeweiligen Sensors 26, notfalls von ihm selbst angebrachten Markierungen. Dies bedeutet erheblichen Aufwand selbst dann, wenn ein Handlesegerät und die beschriebenen Codierungen oder sonstige Aufschriften verwendet werden, und ist überdies fehlerträchtig. Eine Hinterlegung der physischen Position im Sensor 26 ist denkbar und für Diagnosen nützlich, aber die entsprechende Parametrierung erfordert denselben Aufwand. Außerdem hat der Sensor 26 keine Möglichkeit zu prüfen, ob die gespeicherte Information der Realität entspricht.

Da somit eine automatische Zuordnung erheblich vorteilhafter ist, eine Codierung samt Lesegerät jedoch einen gewissen Aufwand bedeutet, erfolgt alternativ die automatische Zuordnung anhand von gemessenen Sensordaten bei bekannter Ventilposition. Auch in einem Rundabfüller erfolgt der Abfüllprozess zumindest teilweise sequentiell. Durch eine Referenzfahrt mit gleichzeitiger Aufzeichnung der Prozessgrößen aller Sensoren 26 werden Daten gesammelt. Die Ventile 22 werden sequentiell geschaltet, und es wird analysiert, bei welchem Sensor 26 die Sensordaten zu der Ventilstellung passen. Anschließend erfolgt vorzugsweise eine Sortierung der Daten, damit sie dem sequentiellen Abfüllprozess entsprechen.

Ein weiterer Aspekt ist die Synchronisation im Netzwerk. Die Teilnehmer sollten vorzugsweise eine gemeinsame Systemzeit verwenden. Dazu gibt es in Lösungen in etablierten Protokollen und Datenübertragungsverfahren, die auch die Erfindung sich vorzugsweise zunutze macht. Nach einer Synchronisation ist eine dezentrale Steuerung des Abfüllvorgangs möglich, bei der die Anlagensteuerung 36 Befehle der Art "Fülle zum Zeitpunkt X ein Volumen Y ab" geben kann. Wenn stattdessen die Anlagensteuerung 36 zentral die komplette Ablaufsteuerung übernimmt und direkte Steuerbefehle ausgibt, könnten Verzögerungen auf dem Kommunikationsweg den Abfüllvorgang und insbesondere die abgefüllte Menge 24 beeinflussen.

Dank der Kommunikationsmöglichkeiten zu den Sensoren 26 oder sogar zwischen den Sensoren 26 ist eine noch bessere Überwachung und Regelung des Abfüllvorgangs durch gemeinsame Auswertung von Sensordaten mehrerer Sensoren 26 denkbar, also eine Sensorfusion. Ein solcher Austausch zwischen den Sensoren 26 war in den Kommunikationsstrukturen herkömmlicher Abfüllanlagen undenkbar. In einer zentralisierten Ausführungsform sammelt die Anlagensteuerung 36 oder die dezentrale Steuerung 40 die Sensordaten der Sensoren 26 ein und verteilt sie an die für eine jeweilige Sensorfusion relevanten Sensoren 26, oder sie wertet sie alternativ selbst gemeinsam aus.

In einer bevorzugten dezentralen Ausführungsform kommunizieren die Sensoren 26 untereinander und versorgen sich so mit den für eine Sensorfusion relevanten Sensordaten. Eine Sensorfusion betrifft vorzugsweise nicht alle Sensoren 26, sondern nur ein Cluster mit relevanten Sensoren 26, insbesondere den Nachbarn. Dazu müssen die Sensoren 26 ihre Nachbarn kennen. Diese Information kann ihnen die Anlagensteuerung 36 beziehungsweise die dezentrale Steuerung 40 liefern, denn die physische Anordnung samt Zuordnung im 5G-Netz ist nach den obigen Erläuterungen bekannt. Alternativ wird den Sensoren 26 eine Tabelle oder sonstige Aufbereitung der vorhandenen Sensoren 26 und deren physischer Anordnung zur Verfügung gestellt, woraus dann jeder Sensor 26 selbst die für ihn relevanten, insbesondere benachbarten Sensoren 26 extrahiert. Nach dieser Vorbereitung können sich die Sensoren 26 dann jeweils die benötigten Sensordaten der anderen Sensoren 26 in ihrem Sensorfusions-Cluster abholen.

Eine drahtlose Kommunikation birgt die Gefahr, dass die Funkverbindung abbricht, und daher ist vorzugsweise für diesen Fall ein Sicherheitskonzept vorgesehen. Dafür genügen einige recht einfache Regeln: für den Fall eines Kommunikationsabbruchs wird ein geschlossenes Ventil 22 nicht geöffnet. Ein geöffnetes Ventil 22 wird sofort oder nach einer festgelegten Zeit geschlossen, alternativ wird der aktuelle Abfüllvorgang noch zu Ende gebracht, soweit eine Abfüllstation 12 dies autark leisten kann.

## Patentansprüche

1. Abfüllvorrichtung (10), insbesondere Rundabfüller, mit einer Sockeleinrichtung (32) und einer gegen die Sockeleinrichtung (32) beweglichen Rondelleinrichtung (34), wobei die Sockeleinrichtung (32) eine Anlagensteuerung (36) und die Rondelleinrichtung (34) eine Vielzahl von Abfüllstationen (12) aufweist, jeweils mit mindestens einem Ventil (22), einer Abfüllstationssteuerung (28) zum über das Ventil (22) gesteuerten Befüllen eines Behälters (20) mit einer vorgegebenen Abfüllmenge (24) eines Mediums (16) sowie einem Sensor (26), insbesondere Durchflussmesssensor, zur Überwachung des Abfüllvorgangs, wobei die Abfüllvorrichtung (10) derart gestaltet ist, dass Kommunikation zwischen der Anlagensteuerung (36) und der Rondelleinrichtung (34) und/oder innerhalb der Rondelleinrichtung (34) über eine drahtlose Verbindung erfolgt,
**dadurch gekennzeichnet,**
**dass** die Abfüllvorrichtung derart gestaltet ist, dass Kommunikation über eine drahtlose Verbindung nach dem Mobilfunkstandard 5G erfolgt, dass die Anlagensteuerung (36) dafür ausgebildet ist, automatisch eine physische Position eines Sensors (26) in der Rondelleinrichtung (34) und eine Netzwerkadresse des Sensors (26) in dem 5G-Netzwerk einander zuzuordnen und dass die Anlagensteuerung (36) für eine Inbetriebnahmephase ausgebildet ist, in der die Ventile (22) in bekannter Abfolge geöffnet und dabei Sensordaten der Sensoren (26) erfasst werden, um anhand eines jeweils geöffneten Ventils (22) und der Sensordaten den Sensor (26) und das Ventil (22) einer Abfüllstation (12) einander zuzuordnen.

2. Abfüllvorrichtung (10) nach Anspruch 1,
wobei die Anlagensteuerung (36) eine 5G-Basisstation (38) aufweist, insbesondere für ein privates Netz der Abfüllvorrichtung (10).

3. Abfüllvorrichtung (10) nach Anspruch 1 oder 2,
wobei die Rondelleinrichtung (34) eine dezentrale zweite Steuerung (40) aufweist, die insbesondere über eine drahtlose Verbindung (42) nach dem Mobilfunkstandard 5G mit der Anlagensteuerung (36) in Verbindung steht.

4. Abfüllvorrichtung (10) nach einem der vorhergehenden Ansprüche,
wobei die zweite Steuerung (40) mindestens eine Abfüllstationssteuerung (28) und/oder wobei mindestens ein Sensor (26) eine Abfüllstationssteuerung (28) aufweist.

5. Abfüllvorrichtung (10) nach einem der vorhergehenden Ansprüche,
wobei mindestens ein Sensor (26) und/oder mindestens ein Ventil (22) eine 5G-Schnittstelle (30, 48) aufweist.

6. Abfüllvorrichtung (10) nach einem der vorhergehenden Ansprüche,
wobei die Sensoren (26) jeweils eine 5G-Schnittstelle (30) aufweisen und innerhalb einer Abfüllstation (12) deren Sensor (26) mit deren Ventil (22) zur Ansteuerung des Ventils (22) verbunden ist.

7. Abfüllvorrichtung (10) nach einem der vorhergehenden Ansprüche,
wobei die Abfüllstationssteuerung (28) dafür ausgebildet ist, das Ventil (22) zu schließen und in mindestens zwei unterschiedlichen Stellungen zu öffnen.

8. Abfüllvorrichtung (10) nach einem der vorhergehenden Ansprüche,
wobei ein jeweiliger Sensor (26) eine Codierung mit einer Identifikationsinformation aufweist, insbesondere einen optischen Code, eine NFC-Kennung oder einen RFID-Code, und wobei die Abfüllvorrichtung (10) mindestens vorübergehend eine Leseeinrichtung für die Codierung aufweist, und wobei insbesondere die Anlagensteuerung (36) für eine Inbetriebnahmephase ausgebildet ist, in der die Sensoren (26) an der Leseeinrichtung vorbeigeführt werden, um die Sensoren (26) in ihren physischen Positionen zu identifizieren.

9. Abfüllvorrichtung (10) nach einem der vorhergehenden Ansprüche,
wobei die Anlagensteuerung (36) einen Abfüllvorgang durch eine Nachricht mit einem gewünschten Zeitpunkt auslöst, der dann dezentral von der Abfüllstationssteuerung (28) durchgeführt wird.

10. Abfüllvorrichtung (10) nach einem der vorhergehenden Ansprüche,
wobei die Sensoren (26) jeweils eine 5G-Schnittstelle (30) aufweisen und miteinander kommunizieren, um den Abfüllvorgang der eigenen Abfüllstation (12) auch anhand von Sensordaten anderer Abfüllstationen (12) zu steuern.

11. Abfüllvorrichtung (10) nach Anspruch 10,
wobei die Sensoren (26) dafür ausgebildet sind, in den Abfüllvorgang der eigenen Abfüllstation (12) Sensordaten bestimmter, insbesondere benachbarter Abfüllstationen (12) einzubeziehen und die bestimmten Abfüllstationen (12) vorab dadurch aufzufinden, dass die Anlagensteuerung (36) eine Topologie der vorhandenen Sensoren (26) an den Sensor (26) kommuniziert.

12. Abfüllvorrichtung (10) nach einem der vorhergehenden Ansprüche,
wobei die Abfüllstationssteuerung (28) dafür ausgebildet ist, bei Unterbrechung der 5G-Kommunikation einen Abfüllvorgang noch zu Ende zu bringen und/oder keinen neuen Abfüllvorgang zu starten.

13. Verfahren zum Abfüllen eines Mediums (16) in eine Vielzahl von Behältern (20) mittels einer Vielzahl von Abfüllstationen (12) einer beweglichen Rondelleinrichtung (34), wobei die Abfüllstationen (12) jeweils über ein Ventil (22) einen Behälter (20) mit einer vorgegebenen Abfüllmenge (24) des Mediums (16) befüllen und den Abfüllvorgang mit einem Sensor (26) überwachen, wobei Kommunikation mit der Rondelleinrichtung (34) und/oder in der Rondelleinrichtung (34) über eine drahtlose Verbindung erfolgt,
**dadurch gekennzeichnet,**
**dass** Kommunikation über eine drahtlose Verbindung nach dem Mobilfunkstandard 5G erfolgt, dass automatisch eine physische Position eines Sensors (26) in der Rondelleinrichtung (34) und eine Netzwerkadresse des Sensors (26) in dem 5G-Netzwerk einander zugeordnet werden und dass in einer Inbetriebnahmephase die Ventile (22) in bekannter Abfolge geöffnet und dabei Sensordaten der Sensoren (26) erfasst werden, um anhand eines jeweils geöffneten Ventils (22) und der Sensordaten den Sensor (26) und das Ventil (22) einer Abfüllstation (12) einander zuzuordnen.

## Claims

1. A filling apparatus (10), in particular a rotary filler, having a base device (32) and a rotary device (34) movable against the base device (32), the base device (32) comprising a system controller (36) and the rotary device (34) comprising a plurality of filling stations (12), each having at least one valve (22), having a filling station controller (28) for filling a container (20), controlled via the valve (22), with a predetermined filling quantity (24) of a medium (16), and a sensor (26), in particular a flowmeter sensor, for monitoring the filling process, the filling apparatus (10) being configured so that communication between the system controller (36) and the rotary device (34) and/or within the rotary device (34) takes place via a wireless connection,
**characterized in that** the filling apparatus is configured so that communication takes place via a wireless connection in accordance with the 5G mobile radio standard, **in that** the system controller (36) is configured to automatically assign a physical position of a sensor (26) in the rotary device (34) and a network address of the sensor (26) in the 5G network to one another, and **in that** the system controller (36) is configured for a start-up phase where the valves (22) are opened in a known sequence while sensor data of the sensors (26) are detected, in order to assign the sensor (26) and the valve (22) of a filling station (12) to one another on the basis of a respective opened valve (22) and the sensor data.

2. The filling apparatus (10) according to claim 1,
wherein the system controller (36) comprises a 5G base station (38), in particular for a private network of the filling apparatus (10).

3. The filling apparatus (10) according to claim 1 or 2,
wherein the rotary device (34) has a decentralized second controller (40) which is connected to the system controller (36) in particular via a wireless connection (42) in accordance with the 5G mobile radio standard.

4. The filling apparatus (10) according to any of the preceding claims,
wherein the second controller (40) comprises at least one filling station controller (28) and/or wherein at least one sensor (26) comprises a filling station controller (28).

5. The filling apparatus (10) according to any of the preceding claims,
wherein at least one sensor (26) and/or at least one valve (22) comprises a 5G interface (30, 48).

6. The filling apparatus (10) according to any of the preceding claims,
wherein the sensors (26) each have a 5G interface (30) and, within a filling station (12), the sensor (26) thereof is connected to the valve (22) thereof for controlling the valve (22).

7. The filling apparatus (10) according to any of the preceding claims,
wherein the filling station controller (28) is configured to close the valve (22) and to open it in at least two different positions.

8. The filling apparatus (10) according to any of the preceding claims,
wherein a respective sensor (26) has a coding with identification information, in particular an optical code, an NFC identifier or an RFID code, and wherein the filling apparatus (10) at least temporarily has a reading device for the coding, and wherein in particular the system control (36) is configured for a start-up phase where the sensors (26) are guided past the reading device in order to identify the sensors (26) in their physical positions.

9. The filling apparatus (10) according to any of the preceding claims,
wherein the system controller (36) triggers a filling process by a message with a desired time, which is then carried out decentrally by the filling station controller (28).

10. The filling apparatus (10) according to any of the preceding claims,
wherein the sensors (26) each have a 5G interface (30) and communicate with each other in order to control the filling process of their own filling station (12) also on the basis of sensor data from other filling stations (12).

11. The filling apparatus (10) according to claim 10,
wherein the sensors (26) are configured to include sensor data of specific, in particular adjacent, filling stations (12) in the filling process of their own filling station (12) and to find the specific filling stations (12) in advance by the system controller (36) communicating a topology of the available sensors (26) to the sensor (26).

12. The filling apparatus (10) according to any of the preceding claims,
wherein the filling station controller (28) is configured to still bring a filling process to an end and/or not to start a new filling process in the event of an interruption of the 5G communication.

13. A method for filling a medium (16) into a plurality of containers (20) by means of a plurality of filling stations (12) of a movable rotary device (34), wherein the filling stations (12) each fill a container (20) with a predetermined filling quantity (24) of the medium (16) via a valve (22) and monitor the filling process with a sensor (26), wherein communication with the rotary device (34) and/or in the rotary device (34) takes place via a wireless connection,
**characterized in that** communication takes place via a wireless connection in accordance with the 5G mobile radio standard, **in that** a physical position of a sensor (26) in the rotary device (34) and a network address of the sensor (26) in the 5G network are automatically assigned to one another, and **in that**, in a start-up phase, the valves (22) are opened in a known sequence while sensor data of the sensors (26) are detected, in order to assign the sensor (26) and the valve (22) of a filling station (12) to one another on the basis of a respectively opened valve (22) and the sensor data.

## Revendications

1. Dispositif de remplissage (10), en particulier remplisseur circulaire, avec un dispositif de base (32) et un dispositif rotatif (34) mobile contre le dispositif de base (32), le dispositif de base (32) comportant une commande de système (36) et le dispositif rotatif (34) comportant une pluralité de stations de remplissage (12), chacune comportant au moins une soupape (22), avec une commande de station de remplissage (28) pour le remplissage d'un récipient (20), commandé par la soupape (22) avec une quantité de remplissage prédéterminée (24) d'un fluide (16), ainsi avec un capteur (26), en particulier un capteur de mesure de débit, pour surveiller le processus de remplissage, en ce que le dispositif de remplissage (10) étant configuré de telle sorte que la communication entre la commande du système (36) et le dispositif rotatif (34) et/ou à l'intérieur du dispositif rotatif (34) s'effectue par une connexion sans fil,
**caractérisé en ce que** le dispositif de remplissage étant configuré de telle sorte que la communication s'effectue par une connexion sans fil selon la norme de téléphonie mobile 5G, **en ce que** la commande du système (36) est configuré pour attribuer automatiquement une position physique d'un capteur (26) dans le dispositif rotatif (34) et une adresse de réseau du capteur (26) dans le réseau 5G l'une à l'autre, et **en ce que** la commande du système (36) est configuré pour une phase de mise en service au cours de laquelle les soupapes (22) sont ouvertes dans une séquence connue et les données des capteurs (26) sont détectées, afin d'attribuer le capteur (26) et la soupape (22) d'une station de remplissage (12) l'un à l'autre à l'aide d'une soupape (22) respectivement ouverte et des données du capteur.

2. Dispositif de remplissage (10) selon la revendication 1,
dans lequel la commande de système (36) comprend une station de base 5G (38), en particulier pour un réseau privé du dispositif de remplissage (10).

3. Dispositif de remplissage (10) selon la revendication 1 ou 2,
dans lequel le dispositif rotatif (34) comprend une deuxième commande décentralisée (40) qui est connectée à la commande du système (36), en particulier par une connexion sans fil (42) selon la norme de téléphonie mobile 5G.

4. Dispositif de remplissage (10) selon l'une des revendications précédentes, dans lequel la deuxième commande (40) comprend au moins une commande de station de remplissage (28) et/ou dans lequel au moins un capteur (26) comprend une commande de station de remplissage (28).

5. Dispositif de remplissage (10) selon l'une des revendications précédentes, dans lequel au moins un capteur (26) et/ou au moins une soupape (22) comprend une interface 5G (30, 48).

6. Dispositif de remplissage (10) selon l'une des revendications précédentes, dans lequel les capteurs (26) comprennent chacun une interface 5G (30) et, à l'intérieur d'une station de remplissage (12), leur capteur (26) est connecté à la soupape (22) pour commander la soupape (22).

7. Dispositif de remplissage (10) selon l'une des revendications précédentes, dans lequel la commande de station de remplissage (28) est configurée pour fermer la soupape (22) et l'ouvrir dans au moins deux positions différentes.

8. Dispositif de remplissage (10) selon l'une des revendications précédentes, dans lequel un capteur respectif (26) comprend un codage avec une information d'identification, en particulier un code optique, un identifiant NFC ou un code RFID, et dans lequel le dispositif de remplissage (10) comprend au moins temporairement un dispositif de lecture pour le codage, et dans lequel en particulier la commande du système (36) est configurée pour une phase de mise en service dans laquelle les capteurs (26) sont guidés devant le dispositif de lecture afin d'identifier les capteurs (26) dans leurs positions physiques.

9. Dispositif de remplissage (10) selon l'une des revendications précédentes, dans lequel la commande du système (36) déclenche un processus de remplissage par un message avec un moment souhaité, qui est ensuite exécuté de manière décentralisée par la commande de station de remplissage (28).

10. Dispositif de remplissage (10) selon l'une des revendications précédentes, dans lequel les capteurs (26) comprennent chacun une interface 5G (30) et communiquent entre eux afin de commander le processus de remplissage de leur propre station de remplissage (12) également à l'aide de données de capteurs d'autres stations de remplissage (12).

11. Dispositif de remplissage (10) selon la revendication 10,
dans lequel les capteurs (26) sont configurés pour intégrer dans le processus de remplissage de la propre station de remplissage (12) des données de capteurs de certaines stations de remplissage, en particulier adjacentes, et pour trouver au préalable les stations de remplissage (12) déterminés par le fait que la commande du système (36) communique au capteur une topologie des capteurs disponibles (26).

12. Dispositif de remplissage (10) selon l'une des revendications précédentes, dans lequel la commande de station de remplissage (28) est configuré pour finir un processus de remplissage et/ou pour ne pas commencer un nouveau processus de remplissage en cas d'interruption de la communication 5G.

13. Procédé de remplissage d'un milieu (16) dans plusieurs récipients (20) au moyen de plusieurs stations de remplissage (12) d'un dispositif rotatif mobile (34), dans lequel les stations de remplissage (12) remplissent chacune un récipient (20) avec une quantité de remplissage prédéterminée (24) du milieu (16) par une soupape(22) et surveillent le processus de remplissage avec un capteur (26), dans lequel la communication avec le dispositif rotatif (34) et/ou dans le dispositif rotatif (34) s'effectue par une connexion sans fil,
**caractérisé en ce que** la communication s'effectue par une connexion sans fil selon la norme de téléphonie mobile 5G, **en ce qu'**une position physique d'un capteur (26) dans le dispositif rotatif (34) et une adresse réseau du capteur (26) dans le réseau 5G sont automatiquement attribuées l'une à l'autre, et **en ce que**, dans une phase de mise en service, les soupapes (22) sont ouvertes dans une séquence connue et les données des capteurs (26) sont détectées, afin d'attribuer le capteur (26) et la soupape (22) d'une station de remplissage (12) l'un à l'autre à l'aide d'une soupape (22) respectivement ouverte et des données du capteur.
